# EUROPEAN PATENT SPECIFICATION

(11) **EP 0 576 100 B1**
(45) Date of publication and mention of the grant of the patent: **01.09.1999**
(21) Application number: 93201836.9
(22) Date of filing: 24.06.1993
(51) Int. Cl.: G06K 19/07, H04L 25/49

(54) **Interference-resistant radio-frequency identification system with large detection distance**
Störunempfindliches Hochfrequenzidentifizierungssystem mit grossem Erkennungsbereich
Système d'identification à haute fréquence résistant aux perturbations et ayant une grande distance de détection

(30) Priority: 24.06.1992 NL 9201116
(43) Date of publication of application: 29.12.1993
(73) Proprietor: N.V. Nederlandsche Apparatenfabriek NEDAP, NL-7141 DE Groenlo (NL)
(72) Inventor: Fockens, Tallienco Wieand Harm, NL-7165 BR Rietmolen (NL); de Jong, Hendrik Johannes, NL-7141 XJ Groenlo (NL); Kip, Harm Jacob, NL-7132 CS Lichtenvoorde (NL)
(74) Representative: Smulders, Theodorus A.H.J., Ir.

(56) References cited:
- EP-A- 0 289 136
- EP-A- 0 346 922
- EP-A- 0 492 569
- ELEKTRONIK no. 9, 30 April 1991, MUNCHEN DE pages 118 - 120 , XP000228506 SANDER ET AL. 'ASICS FUER DIE OBJEKTERKENNUNG'
- ELEKTOR ELECTRONICS vol. 15, no. 167, May 1989, CANTERBURY GB pages 32 - 38 , XP000105440 'radio data system (rds) demodulator'
- IEEE MTT-S INTERNATIONAL MICROWAVE SYMPOSIUM DIGEST vol. II, May 1990, DALLAS, TEXAS US pages 957 - 960 , XP000144114 OHTA ET AL. 'COMPACT MICROWAVE REMOTE RECOGNITION SYSTEM WITH NEWLY DEVELOPED SSB MODULATION'

## Description

The invention relates to a radio-frequency identification system according to the preamble of Claim 1. It comprises a reading device and a number of labels having a circuit containing an electronically stored code and/or information which can be read remotely by the reading device (also called transceiver), which to that end transmits a continuous interrogation signal of a predetermined frequency, the labels comprising a resonant circuit having a resonance frequency substantially corresponding to the frequency of the interrogation signal and located at or near the peak of the resonance rise band of the resonance curve of the resonant circuit, the labels comprising modulation means for modulating the interrogation signal.

Radio-frequency identification systems of this type are disclosed in inter alia applicant's U.S. Patent 4,196,418 and EP-A-0 289 136.

A disadvantage of the prior art system is that the maximum detection range at the maximum field strength of an interrogation field prescribed by the authorities in the various countries is limited due to interferences at the receiving end, which are caused by the system's own interrogation field. Moreover, similar systems, located at a short distance from each other, can interfere with each other.

EP- A- 0 346 922 discloses an identification system according to the preamble of claim 1, in which microwaves sent by a reading device are modulated and are reflected by a label. In order to avoid disturbance by other reading devices working at the same frequency, the label modulates the data onto a subcarrier first, before modulating the main carrier. At the reading device a band- pass filter extracts sidebands from the received signal for demodulation.

The object of the invention is to obviate the disadvantages outlined above and in general to provide an efficient and reliably operating identification system of the type defined above. To that end, according to the invention, an identification system having the features of Claim 1 is provided. The modulation means are arranged to generate a data signal located in at least one narrow side band adjacent to the frequency of the interrogation signal, which at least one side band is located at such a distance from the frequency of the interrogation signal that the at least one side band is on the one hand located in the resonance rise band of the resonance curve of the resonant circuit of the labels and that on the other hand the at least one side band is yet located so far from the frequency of the interrogation signal and that this frequency plus a band surrounding it is filtered out by means of a filter of the receiver of the system without affecting the at least one narrow side band.

It should be noted that the invention applies to both an identification system which is only adapted for detecting information stored in a label and a system in which at least a number of labels are reprogrammable by means of a write device and/or a system having at least a number of labels whose information content is determined at least partly by one or more sensors coupled to the labels. In this connection these systems are sometimes referred to as data exchange systems or detection systems. Furthermore, instead of the term "label", other expressions are commonly used, such as responder, transponder, data carrier, card, pass, etc.. The labels can advantageously be passive, i.e., the labels do not have a battery of their own, but may optionally be active. The transceiver is alternatively denoted interrogation device instead of reading device.

The terms used in the present description also comprise the above-mentioned and similar customary, alternative expressions.

The arrangement will be described in greater detail hereinafter, with reference to the accompanying drawings.
Figure 1 shows in broad outline a circuit diagram of an identification system in which the invention can be embodied;
Figure 2 schematically shows the resonance curve of a resonant circuit;
Figure 3 schematically illustrates the operation of a system according to the invention, on the basis of a resonance curve of a resonant circuit; and
Figures 4 and 5 schematically show two possible types of encoding for use with an arrangement according to the invention.

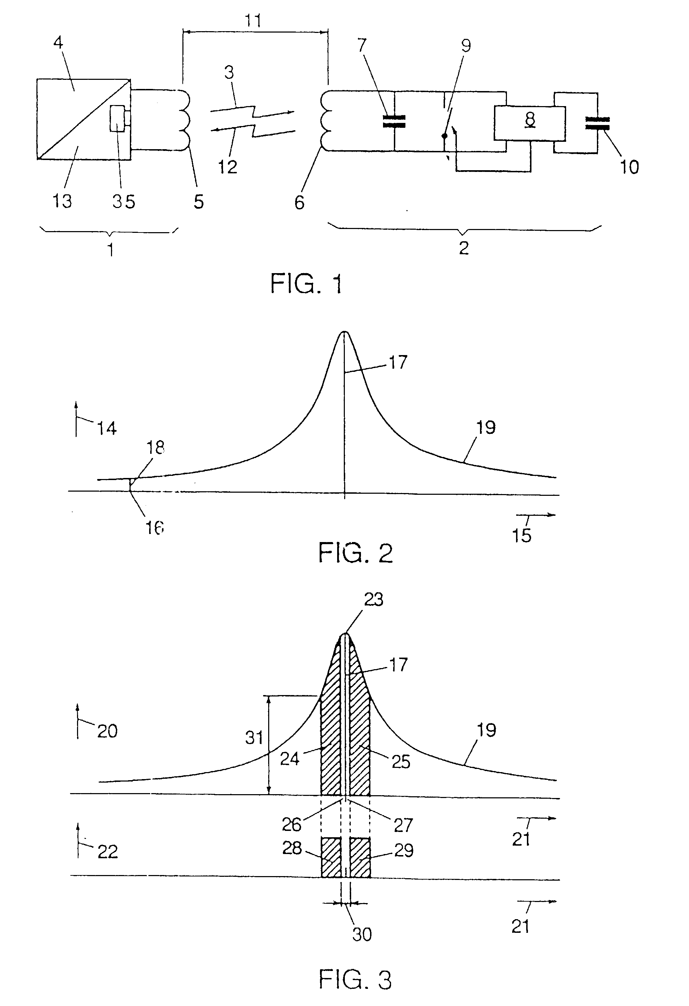

Fig. 1 shows a circuit diagram of a contactlessly operating identification system or detection system or information exchange system according to the invention. The operation of such a system is shown in Fig. 1. The system is comprised of a reading device 1 and one or a plurality of detection labels 2. For the interrogation of an identification label 2, an interrogation field 3 is generated by means of a transmitter 4. This field is radiated by a transmission coil 5. The field is a radio-frequency field of, for example, 120 kHz. A coil 6 is tuned to the frequency of the interrogation field 3 by means of resonant capacitor 7 in the label 2 and starts to resonate in response thereto.

The labels include a circuit 8 which is typically provided on a chip as an integrated circuit and contains the code and/or information stored in a label, as well as means for controlling a modulator in the rhythm of the code or information. As soon as there is sufficient voltage across the integrated circuit 8, the circuit is triggered, so that the label code is generated and applied to the modulator, in this example constituted by a code switch 9, which partly or completely shortcircuits the resonant circuit 6, 7 in the rhythm of the code, which may or may not occur via a load impedance. The transceiver antenna 5 of the reading device is now subject to damping variations in the rhythm of the code, so that the latter can be recovered in receiver 13. To prevent the chip 8 in the label 2 from ceasing to operate during shortcircuiting of the resonant circuit 6,7 by the modulator 9, a small smoothing capacitor 10 is present, which keeps the voltage across the chip 8 sufficiently high during this period. The value of this capacitor 10 depends on the period of time during which a shortcircuit of the resonant circuit 6,7 can occur. There is no need for the capacitor 10 to supply transmission energy. In the system according to the invention, the required capacitance of capacitor 10 is so small that it can be co-integrated on IC 8.

This type of identification system, however, in the form in which it has been described so far, has the disadvantage that the maximum obtainable detection distance 11 at the interrogation field strengths 3 allowed in the various countries is limited due to the fact that the receiver interferes through its own transmission field 3 with the relatively weak return signal 12 of the label 2. In addition, identification systems which are situated near to each other can interfere with each other.

It is known to prevent interference by the transmission field - which, in the system mentioned, is continuously present, i.e., also during reception - by switching off the transmission field 3 during the reception of the return signal 12 from the label 2. However, a large number of disadvantages are inherent to such a pulsed (intermittent) system, such as:
- the power supply of the electronics in the identification label is interrupted during the transmission of the return signal, since the supply is derived from the energy of the transmission signal; for reasons of reliability and service life, the label itself does not contain a battery. At those instants, therefore, the supply voltage can only be supplied by a built-in capacitor, which is charged from the transmission signal during interrogation. Accordingly, such a capacitor temporarily takes over the task of power supply from the interrogation signal and the value of the capacitor must therefore be much larger than the value of a smoothing capacitor as used in Fig. 1. As a consequence, the capacitor in such a system with interrupted interrogation signal cannot be integrated on the label-IC; thus, this label continues to comprise more components and consequently is less reliable and more expensive than the label of a continuously interrogated label;
- two of these pulsed-interrogation systems interfere with each other when they are positioned near each other because, since the interrogation pulses are not in synchronism, the interrogation signal of one system may still coincide with the return transmission period in the other system. Synchronization of the systems is then necessary, but this causes disadvantages in actual practice;
- poor temporal efficiency of the return transmission signal due to the fact that charging the energy capacitor takes time, during which the code is not returned. To compensate for this loss of time, the code will be rapidly sent back from the label (i.e., at a high signal rate). In practice, the ratio of charging time to send-back time will for instance be from 1 : 1 to 5 : 1. This means, therefore, that the transmission rate will have to be 2 to 6 times higher than in the system with continuous interrogation field, where the return of the code is effected immediately. However, a higher transmission rate requires a correspondingly larger bandwidth of the receiver of the reading device. This, of course, increases the risk of noise signals being picked up, which adversely affects the detection range and receiving reliability;
- loss of detection time in dynamic circumstances. In many cases, a label (attached, for example, to an animal) must be read by a stationary detection system. If such a system is a pulsed system, it can easily happen that the portion of the charge pulse received by the label upon entry of the interrogation field is too short to charge the energy capacitor adequately. In that case, return transmission does not start at the end of the first charge pulse, but the end of the subsequent charge pulse must be waited for. Result: loss of detection time;
- lost synchronization between reading device and label during return of the code. As a result, the label must generate its own clock frequency for the determination of the return transmission frequency and the rate of the code. This is expensive and renders the label more sensitive to ambient influences (for example, temperature and nearby conducting material). In a system with a continuous interrogation signal, by incompletely shorting the incoming signal in the label when returning the code, the frequency of the interrogation signal is simply used as a clock for the label. Thus, the label is never "released", so that, for example, a very simple and reliable synchronous detection principle becomes possible;
- lower flexibility for future code extension. In connection with the limited capacitor capacity and the required charging time, the code to be returned is of a limited length. If the code is to become longer, then this is only possible by intermediate recharging of the power capacitor. This results in loss of time and is technically complicated;
- possible influence on cardiac stimulators (pacemakers); this can only occur with pulsed systems.

Figure 2 illustrates a different method and shows a resonance characteristic 19 of a resonant circuit. The signal strength is plotted along the vertical axis 14, and the frequency is plotted along the horizontal axis 15. To obviate the problem of a negative effect by its own interrogation field, the carrier frequency 16 of the returned label signal differs considerably from the frequency 17 of the interrogation field, which frequency 17 corresponds to the resonant frequency of the resonant circuit in the label and typically also in the transceiver device. The return transmission frequency 16 may for instance be half the resonant frequency 17. This does indeed solve the above-mentioned problem but involves the drawback that the amplitude 18 of the return signal becomes very small because this signal is so far removed from the resonant frequency 17 of the LC circuit of the label. Such a weak signal obviously limits the detection range to a significant extent.

The solution to this problem of the adverse effect caused by the interrogation signal, while it is yet transmitted continuously, and, moreover, the detection range is large because of a strong return signal from the label, is obtained in accordance with the invention by providing that the return signal extends over one or two narrow sidebands which are located in the resonance rise band close to the peak of the resonance curve of the label, but are distinctly separated from each other. At the receiving end, the main frequency can be filtered out with sufficient bandwidth and only the content of one or both sidebands is used for recovering the data.

The sidebands are actually formed by a subcarrier on which the code and/or information from the label memory is modulated. Consequently, the modulated subcarrier comprises the subcarrier proper and associated sidebands. The subcarrier band thus obtained constitutes a signal band and has a relatively small bandwidth. This signal band is thereafter converted into two sidebands on both sides of the main carrier in a second modulation procedure or frequency transformation procedure. The inverse frequency transformation is performed at the receiving end, so that the modulated subcarrier is recovered again. This signal, in turn, is demodulated so as to obtain the data bits.

The intermediate step of the modulated subcarrier provides that the bandwidth at both the low end and at the high end is limited, so that the high-frequency signal is contained within the resonance curve of the label coil and, also, a "gap" is formed on either side close to the main carrier. The first fact is advantageous in that thereby the Q-factor of both the label circuit and the reader circuit can be kept high, which is necessary for a large read distance. The second fact is important because then the receiver of the reading device can be rendered insensitive to the frequency range of the "gap", so that nearby reading devices, which may have a slightly different carrier frequency, can no longer cause any interference.

Fig. 3 illustrates the above-described feature. The upper graph shows the signal resonance rise 20 of the resonant circuit of a label as a function of the frequency 21, and the lower graph shows the bandpass response 22 of the receiver 13 of the reading device 1 (Fig. 1). The resonance curve 19 of the label-LC circuit 6,7 (Fig. 1) has its peak 23 at the interrogation field frequency 17. The information of the data to be transmitted from the label 2 is now contained in the two narrow sidebands 24 and 25, each at a distance 26 and 27 from the main carrier 17. The receiver 13 (Fig. 1) includes a filter 31 which has transmission bands 28 and 29 rated for the data bands 24 and 25 and suppresses the main carrier 17 over a bandwidth 30 extending on both sides of the frequency 17. This suppression of the frequency band 30 prevents the interrogation frequency 17 from interfering with the receiver 13 (Fig. 1). Even systems located in proximity to each other and having the same interrogation frequency 17 will not interfere with each other, so that synchronization of those systems is superfluous. The data-information containing sidebands 24 and 25 are very narrow and, accordingly, so are the band pass filters 28 and 29. As a result, only little RF interference from the environment can penetrate into the system and, accordingly, this type of interference has a relatively minor detection range-reducing effect.

The sidebands 24 and 25 are so chosen that they fall with ample margin within the resonant curve 19 of the LC circuit 6, 7 (Fig. 1) of the label 2. Consequently, maximum use is made of the resonance rise effect near the peak 23 of resonance curve 19, so that a large minimal signal amplitude 31 is produced. In a practical case, the amplitude 31 can amount to 60% or more of the signal amplitude at the peak 23. This results in a large detection distance 11 (Fig. 1), while the sensitivity to noise is low. It is of course of importance to provide that the signal level 31 is as high as possible. To that end the distances 26 and 27 must be as small as possible. In practice it was found that, using the modern filtering techniques, a bandwidth 30 for suppressing 0.4 to + 0.4% of the main frequency is very well possible. The current transmitters are of such good quality that outside this band only very little noise is left. Because the transmitter and the receiver are controlled by the same (crystal) oscillator, no additional problems caused by clock frequency deviations occur.

In addition, the modulation means of the labels must be so designed that the bandwidths 24 and 25 are as narrow as possible, in order to keep the amplitude of the data signal 31 at a maximum. In practice, it was found that at a height of signal 31 of approximately 60% of the peak 23, an excellent detection range can be achieved, which is certainly of the same order of magnitude as in a system with a pulsed interrogation field. The width of the sidebands 24 and 25 depends on the signal rate (number of bits per second) and on the coding method. So as to obtain narrow bands 24, 25, therefore, use should preferably be made of codes with a small bandwidth. The frequently used NRZ (non return to zero) code does not satisfy this desire. In this coding method, a bit to be transmitted is simply determined by an open ("1") or closed ("0") position of switch 9 (Fig. 1). Since in a code an unlimited number of bits of equal value may be present, this means that the data bands can touch the interrogation frequency.

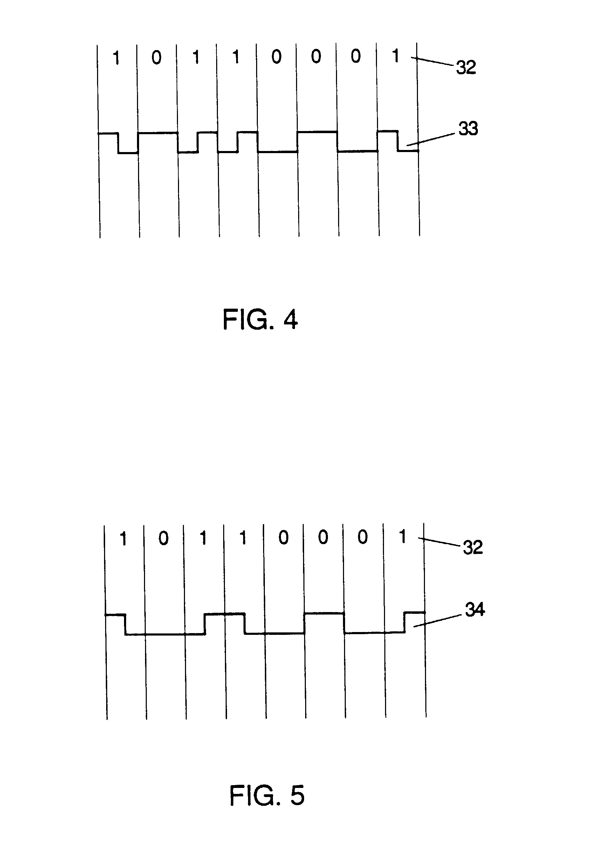

More suitable for use are the so-called Manchester and Bi-phase encoding methods. In a practical test, applicants made use of the second type, as explained in Fig. 4. In the label electronics, the code 32 to be transmitted is converted to a phase shift (PSK) signal 33. Each "1" contains a phase jump, a "0" does not contain a phase jump, furthermore a phase jump occurs on each bit transition. The direction of the phase jump is not important. In this coding method, the bandwidth of the data signal is
(1 - 1/2) + 2 x 1/4 = 1 x the signal rate (bit rate) in bits per second, and the interior side of the signal band is 1/4 of the bit rate removed from the interrogation frequency. At a bit rate of 2 kbits/sec, this distance is then 500 Hz. With a frequently used interrogation field frequency of 120 kHz, this is more than the above-mentioned 0.4% of the transmission frequency. In accordance with the above computation, at a bit rate of 2 kbits/sec, the bandwidth is 2 kHz for each sideband.

The PSK signal mentioned may be considered to be a modulated subcarrier and in the present embodiment is amplitude-modulated on the 120 kHz signal by the modulator 9. In the receiver the 120 kHz signal is stopped by the filter 31 and only the sidebands are allowed to pass. Through direct conversion, the baseband phase-modulated signal is directly recovered and processed further. The Manchester code could also be used and would then result in the same bandwidth characteristic. Of course, instead of using the two sidebands, it is alternatively possible to use only one sideband. However, as it is to be expected that noise signals in the two sidebands are *not* correlated, whereas the two sideband components of the data signal are, it is usually more advantageous to detect both sidebands and to add them together as baseband signals.

The sidebands are narrow and located close to the centre frequency of the resonance curve 19 (Fig. 3). The strength of the return signal with respect to the peak 23 of the resonance curve 19 (Fig. 3) is bound up with the electric quality Q of the resonant circuit 6, 7 (Fig. 1).

In a practical embodiment it may hold that Q = 30 and the minimum height 31 of the return signal can be approximately 60% of the peak height 23 of the resonance curve. This provides an adequate detection distance.

In the above example the bit rate was 2 kbit/sec. This is sufficient in many cases; sometimes, however, it is important to obtain a highest possible transmission rate of the code. The bandwidth, however, must remain limited in connection with the desired height of the return signal and hence the detection distance.

A coding type with which, within the same sideband width, a bit rate can be obtained which is twice higher than in the case of the Manchester or Bi-phase codes is the so-called Delay modulation or Miller code, which is indicated at 34 in Fig. 5. In the label, this code, too, is modulated on the main frequency as a form of PSK signal by means of amplitude modulation. Detection is effected in the manner described above with recovery of the PSK signal through direct conversion in the sidebands. The detection of this coding requires a signal-to-noise ratio approximately 3dB higher. This, however, is no problem as the required bandwidth at the receiving end is smaller by a factor 2 than with the Manchester or Bi-phase coding, so that the noise level is approximately 3 dB lower.

## Claims

1. A radio-frequency identification system comprising one or more labels which can be read remotely by a transceiver which transmits a continuous interrogation signal, the labels comprising modulation means for modulating the interrogation signal, wherein a data signal which is sent back by a label extends over two sidebands and wherein in the label the sidebands are formed by a subcarrier on which data from a memory of the label is modulated and wherein the sidebands are located on both sides of the frequency of the interrogation signal, characterized in that the labels comprise a resonant circuit having a resonance frequency substantially corresponding to the frequency of the interrogation signal and located at or near the peak of the resonance rise band of the resonance curve of the resonance circuit wherein the sidebands are so chosen that they are located in the resonance rise band of the resonance circuit of the label and that they fall with ample margin within the resonant curve of the resonant circuit wherein in the transceiver the interrogation signal plus a band surrounding it is filtered out by means of a filter of the transceiver without affecting at least one of said sidebands and only the content of one or both sidebands is used for recovering data.

2. A radio-frequency identificaton system as claimed in Claim 1, characterized in that the label is provided with means for modulating the subcarrier with the data in a first step and converting the modulated subcarrier into the two sidebands by means of modulation or frequency transformation in a second step.

3. A radio-frequency identification system as claimed in Claim 1 or 2, characterized in that the tranceiver is provided with means for recovering the modulated subcarrier from at least one of the side bands in a first step and demodulating the obtained modulated subcarrier so as to obtain the data in a second step.

4. A radio-frequency identification system as claimed in any of the preceding Claims, characterized in that the side bands have such a position within the resonance curve of the resonant circuit of the labels that the resonance rise in that region amounts to at least 60% of the peak height of the resonant curve.

5. A radio-frequency identification system als claimed in any of the preceding Claims, characterized in that the frequency distance between each side band and the interrogation frequency is greater than 0,4% of the interrogation frequency.

6. A radio-frequency identification system as claimed in any of the preceding Claims, characterized in that, to obtain side bands, the labels are adapted to code the data signal in accordance with the Manchester or the Bi-phase method and subsequently to modulate it on the interrogation signal in the resonant circuit of the label by means of amplitude modulation.

7. A radio-frequency identification system as claimed in any one of Claims 1 to 5, characterized in that the data signal is coded in accordance with the so-called Delay modulation (=Miller) method and is thereafter modulated on the interrogation signal in the resonant circuit by means of amplitude modulation.

8. A radio-frequency identification system as claimed in any one of Claims 1 to 7, characterized in that the receiver includes a filter which allows only one or both of the data-containing side bands to pass and suppresses the interrogation frequency plus a surrounding band.

9. A radio-frequency identification system as claimed in any one of the preceding Claims, characterized in that the modulation means are adapted to form a subcarrier modulated with the information from the label, which subcarrier in turn is modulated on the interrogation signal.

10. A radio-frequency identification system as claimed in any one of the preceding Claims, characterized in that only one of the said two side bands is used for the data signal.

11. A radio-frequency identification system as claimed in Claim 9 or 10, characterized in that the modulated subcarrier is modulated on the interrogation signal by means of amplitude modulation.

## Patentansprüche

1. Hochfrequenz-Identifizierungssystem mit einer oder mehreren Markierungen, die von einem Senderempfänger, der ein kontinuierliches Abfragesignal sendet, ferngelesen werden können, wobei die Markierungen Modulationseinrichtungen zum Modulieren des Abfragesignals aufweisen, wobei sich ein von einer Markierung zurück gesendetes Datensignal über zwei Seitenbänder erstreckt und wobei in der Markierung die Seitenbänder durch einen Unterträger gebildet sind, auf dem Daten aus einem Speicher der Markierung moduliert sind und wobei die Seitenbänder auf beiden Seiten der Frequenz des Abfragesignals liegen, dadurch gekennzeichnet, daß die Markierungen eine Resonanzschaltung mit einer Resonanzfrequenz aufweisen, die im wesentlichen der Frequenz des Abfragesignals entspricht und bei oder nahe dem Peak des Resonanzanstiegsbandes der Resonanzkurve der Resonanzschaltung liegt, wobei die Seitenbänder derart gewählt sind, daß sie im Resonanzanstiegsband der Resonanzschaltung der Markierung liegen und mit geeignetem Spielraum in die Resonanzkurve der Resonanzschaltung fallen, wobei das Abfragesignal und ein dieses umgebendes Band im Senderempfänger mittels eines Filters des Senderempfängers ausgefiltert wird, ohne daß wenigstens eines der Seitenbänder beeinflußt wird, und wobei nur der Inhalt eines der oder beider Seitenbänder zur Datenwiederherstellung verwendet wird.

2. Hochfrequenz-Identifizierungssystem nach Anspruch 1, dadurch gekennzeichnet, daß die Markierung mit einer Einrichtung versehen ist, die in einem ersten Schritt den Unterträger mit den Daten moduliert, und in einem zweiten Schritt den modulierten Unterträger durch Modulation oder Frequenztransformation in die beiden Seitenbänder umwandelt.

3. Hochfrequenz-Identifizierungssystem nach Anspruch 1 oder 2, dadurch gekennzeichnet, daß der Senderempfänger mit einer Einrichtung versehen ist, die in einem ersten Schritt den modulierten Unterträger aus wenigstens einem der Seitenbänder wiederherstellt und in einem zweiten Schritt den erhaltenen modulierten Unterträger demoduliert, um so die Daten zu erhalten.

4. Hochfrequenz-Identifizierungssystem nach einem der vorhergehenden Ansprüche, dadurch gekennzeichnet, daß die Seitenbänder eine derartige Position innerhalb der Resonanzkurve der Resonanzschaltung der Markierungen einnehmen, daß der Resonanzanstieg in diesem Bereich wenigstens 60% der Peak-Höhe der Resonanzkurve beträgt.

5. Hochfrequenz-Identifizierungssystem nach einem der vorhergehenden Ansprüche, dadurch gekennzeichnet, daß der Frequenzabstand zwischen jedem Seitenband und der Abfragefrequenz größer ist als 0,4% der Abfragefrequenz.

6. Hochfrequenz-Identifizierungssystem nach einem der vorhergehenden Ansprüche, dadurch gekennzeichnet, daß die Markierungen zum Erhalten von Seitenbändem das Datensignal nach dem Manchester- oder dem Bi-Phasenverfahren zu codieren und anschließend durch Amplitudenmodulation auf das Abfragesignal in der Resonanzschaltung der Markierung modulieren können.

7. Hochfrequenz-Identifizierungssystem nach einem der Ansprüche 1-5, dadurch gekennzeichnet, daß das Datensignal nach dem sogenannten Verzögerungsmodulationsverfahren (=Miller-Verfahren) codiert wird und anschließend durch Amplitudenmodulation auf das Abfragesignal in der Resonanzschaltung der Markierung moduliert wird.

8. Hochfrequenz-Identifizierungssystem nach einem der Ansprüche 1-7, dadurch gekennzeichnet, daß der Empfänger ein Filter aufweist, daß nur eines der oder beide Daten enthaltenden Seitenbänder durchläßt und die Abfragefrequenz plus einem umgebenden Band unterdrückt.

9. Hochfrequenz-Identifizierungssystem nach einem der vorhergehenden Ansprüche, dadurch gekennzeichnet, daß die Modulationseinrichtung einen mit den Informationen der Markierung modulierten Unterträger zu bilden, der seinerseits auf das Abfragesignal modulieren kann.

10. Hochfrequenz-Identifizierungssystem nach einem der vorhergehenden Ansprüche, dadurch gekennzeichnet, daß nur eines der beiden Seitenbänder als Datensignal verwendet wird.

11. Hochfrequenz-Identifizierungssystem nach Anspruch 9 oder 10, dadurch gekennzeichnet, daß der modulierte Unterträger durch Amplitudenmodulation auf das Abfragesignal moduliert wird.

## Revendications

1. Système d'identification à fréquences radio comprenant une étiquette ou plus pouvant être lue(s) à distance par un émetteur-récepteur qui émet un signal d'interrogation continu, les étiquettes comprenant un dispositif de modulation servant à moduler le signal d'interrogation, dans lequel un signal de données qui est renvoyé par une étiquette occupe deux bandes latérales et dans lequel les bandes latérales dans l'étiquette sont formées par une sous-porteuse sur laquelle sont modulées des données d'une mémoire de l'étiquette et dans lequel les bandes latérales sont situées des deux côtés de la fréquence du signal d'interrogation, caractérisé en ce que les étiquettes comprennent un circuit oscillant ayant une fréquence de résonance correspondant substantiellement à la fréquence du signal d'interrogation et située au pic, ou au voisinage du pic, de la bande d'accroissement de résonance de la courbe de résonance du circuit oscillant dans lequel les bandes latérales sont choisies de telle sorte qu'elles soient situées dans la bande d'accroissement de résonance du circuit oscillant de l'étiquette et qu'elles tombent avec une grande marge à l'intérieur de la courbe de résonance du circuit oscillant dans lequel, dans l'émetteur-récepteur, le signal d'interrogation et une bande entourant ce dernier sont filtrés au moyen d'un filtre de l'émetteur-récepteur, sans affecter au moins l'une desdites bandes latérales, et seul le contenu de l'une ou des deux bandes latérales est utilisé pour récupérer les données.

2. Système d'identification à fréquences radio selon la revendication 1, caractérisé en ce que l'étiquette est pourvue de moyens servant à moduler la sous-porteuse avec les données dans une première étape et à convertir la sous-porteuse modulée en deux bandes latérales au moyen d'une modulation ou d'une transformation de fréquence dans une deuxième étape.

3. Système d'identification à fréquences radio selon la revendication 1 ou 2, caractérisé en ce que l'émetteur-récepteur est pourvu de moyens servant à récupérer la sous-porteuse modulée à partir d'au moins une des bandes latérales dans une première étape et à démoduler la sous-porteuse modulée obtenue afin d'obtenir les données dans une deuxième étape.

4. Système d'identification à fréquences radio selon l'une quelconque des revendications précédentes, caractérisé en ce que les bandes latérales ont une telle position à l'intérieur de la courbe de résonance du circuit oscillant des étiquettes que l'accroissement de résonance dans cette région s'élève jusqu'à au moins 60% de la hauteur du pic de la courbe de résonance.

5. Système d'identification à fréquences radio selon l'une quelconque des revendications précédentes, caractérisé en ce que la distance en fréquence entre chaque bande latérale et la fréquence d'interrogation est supérieure à 0,4% de la fréquence d'interrogation.

6. Système d'identification à fréquences radio selon l'une quelconque des revendications précédentes, caractérisé en ce que, pour obtenir des bandes latérales, les étiquettes sont adaptées pour coder le signal de données d'après le procédé Manchester ou le procédé à deux états de phase et pour ensuite le moduler sur le signal d'interrogation dans le circuit oscillant de l'étiquette au moyen d'une modulation d'amplitude.

7. Système d'identification à fréquences radio selon l'une quelconque des revendications 1 à 5, caractérisé en ce que le signal de données est codé d'après le procédé de modulation à retard (=Miller) et est ensuite modulé sur le signal d'interrogation dans le circuit oscillant au moyen d'une modulation d'amplitude.

8. Système d'identification à fréquences radio selon l'une quelconque des revendications 1 à 7, caractérisé en ce que le récepteur inclut un filtre qui ne permet qu'à une ou aux deux bandes latérales contenant des données de passer et supprime la fréquence d'interrogation plus une bande entourant celle-ci.

9. Système d'identification à fréquences radio selon l'une quelconque des revendications précédentes, caractérisé en ce que les moyens de modulation sont adaptés pour former une sous-porteuse modulée avec les informations provenant de l'étiquette, laquelle sous-porteuse à son tour est modulée sur le signal d'interrogation.

10. Système d'identification à fréquences radio selon l'une quelconque des revendications précédentes, caractérisé en ce que seule une desdites deux bandes latérales est utilisée pour le signal de données.

11. Système d'identification à fréquences radio selon la revendication 9 ou 10, caractérisé en ce que la sous-porteuse modulée est modulée sur le signal d'interrogation au moyen d'une modulation d'amplitude.
